(19)

Europäisches Patentamt
European Patent Office
Office européen des brevets

(11) **EP 1 780 674 A2**

(12) **EUROPEAN PATENT APPLICATION**

(43) Date of publication:
**02.05.2007 Bulletin 2007/18**

(51) Int Cl.:
*G06T 7/00* (2006.01)    *G06T 5/40* (2006.01)

(21) Application number: **06119164.9**

(22) Date of filing: **18.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **19.08.2005 RU 2005126348
28.07.2006 KR 20060071781**

(71) Applicant: **Samsung Electronics Co., Ltd.
Suwon-si
442-742 Gyeonggi-Do (KR)**

(72) Inventors:
- **Rychagov, Michael N
  Moscow (RU)**
- **Efimov, Sergei V
  Moscow (RU)**

(74) Representative: **Robinson, Ian Michael
Appleyard Lees
15 Clare Road
Halifax, West Yorkshire HX1 2HY (GB)**

(54) **Image processing device and method for determination of image quality**

(57)    An image processing device that determines the image quality includes a division unit (110) dividing image data into a plurality of divided images, a calculation unit (120) calculating luminance histograms of the respective divided images, and a judgment unit (130) judging qualities of the respective divided images using the luminance histograms of the divided images and judging the quality of the image data in consideration of rates of the judged qualities. Accordingly, the quality of the image data can be determined more accurately and more precisely.

FIG. 1

DIVISION UNIT (110) → CALCULATION UNIT (120) → JUDGMENT UNIT (130)

EP 1 780 674 A2

**Description**

The present invention relates generally to an image processing device to determine image quality and a method thereof. More particularly, some aspects of the present invention relate to an image processing device and a method thereof, which can precisely determine image quality by dividing an image and judging the quality of the whole image using luminance histograms of the respective divided images.

Recently, with the development of the electronic and optical technologies, imaging devices having diverse designs and performances have been developed and spread. Such an imaging device may be a digital camera, a portable phone, a PDA, a notebook PC, a desktop PC, and other like devices. One of the functions used in to such an imaging device is an auto photofinishing function. This auto photofinishing function is a function that automatically judges whether the photographed data is low-quality data that is not data worth photofinishing.

The quality of the photographed image may differ due to various causes, such as the degree of exposure, flash state, noise, defects in a compression process, color unevenness, abnormal color tone, and other like causes. Among these causes, the exposure problem is regarded as an important factor that may occur most frequently. Since the data photographed in a bad exposure state may be developed as an image that is beyond recognition by a user, it is required to discard the image or to improve the image by performing a separate image improvement process. For this, it is required to perform a process of judging the quality of the image data before the photofinishing.

Many patent applications have been filed that describe the process of judging the quality of image data. For instance, U.S. Patent Publication No. 2002/109854 discloses a system and method of displaying and printing a digital image. According to this system and method, the determination and detection of image defect characteristics are performed as the basic work for image compensation, such as the determination of the number of image compensation methods, the degree of compensation, the preferential compensation type, and others.

Additionally, U.S. Patent Publication No. 2003/151674 discloses a method of determining the quality of an image captured in a digital camera. According to this method, the result of determining the image quality is fed back to a camera user, so that the user can determine whether to store the captured image or to re-photograph the image.

Also, U.S. Patent Publication No. 2004/120599 discloses a method of analyzing luminance histograms of an image to determine the image quality.

In addition, U.S. Patent Publication No. 2004/258308 and U.S. Patent No. 6,826,310 disclose the determination of an image quality.

However, the above-described techniques determine the image quality in consideration of the luminance of the whole image and so on. Accordingly, it is quite possible that luminance histograms of a low-quality image are measured in the similar manner to those of a high-quality image. In this case, even the low-quality image may be judged as the high-quality image. By contrast, even the high-quality image may be determined as the low-quality image and then discarded by reason that the luminance histograms are not properly distributed. As described above, according to the prior art techniques, it is difficult to accurately judge the image quality.

According to the present invention there is provided an apparatus and method as set forth in the appended claims. Preferred features of the invention will be apparent from the dependent claims, and the description which follows.

Aspects of the present invention provide an image processing device and a method thereof, which can precisely determine the image quality by dividing a photographed image and judging the quality of the whole image using luminance histograms of the respective divided images.

An image processing device, according to an aspect of the present invention, includes a division unit dividing image data into a plurality of divided images, a calculation unit calculating luminance histograms of the respective divided images, and a judgment unit judging qualities of the respective divided images using the luminance histograms of the divided images and judging the quality of the image data in consideration of rates of the judged qualities.

According to an aspect of the invention, the image processing device further includes a contrast adjustment unit (140) adjusting the whole contrast of the image data and providing the adjusted contrast to the division unit.

According to an aspect of the invention, the contrast adjustment unit (140) adjusts the whole contrast of the image data using the following equations,

$$low = \begin{cases} \min\{i \ / \ H(i) > H_0 \ , \ i < T \ or \ i = T\} \\ T \ , \ i > T \end{cases}$$

$$high = \max(i) \ : \ H[i] > T$$

$$R(r,c) = (2^n - 1) * \{(R(r,c) - low\} / (high - low)$$

$$G(r,c) = (2^n - 1) * \{(G(r,c) - low) / (high - low)$$

$$B(r,c) = (2^n - 1) * \{(B(r,c) - low) / (high - low)$$

where, *low* and *high* denote lower and upper limit values for contrast adjustment, *i* luminance, *H(i)* luminance frequency, *r* and *c* horizontal and vertical coordinates of a pixel, *T* a threshold value for preventing an image from being excessively dark, $H_0$ a threshold value of histogram levels, n the number of image bits, and *R(r, c), G(r, c),* and *B(r, c)* are R, G, and B component values, respectively.

According to an aspect of the invention, the judgment unit judges the divided image, of which an average value of the luminance histograms is below a preset first threshold value, as an underexposed image, judges the divided image, of which the average value of the luminance histograms is over a preset second threshold value, as an overexposed image, judges the divided image, of which the average value of the luminance histograms is over the preset first threshold value and is below the preset second threshold value, and of which the standard deviation is below a preset threshold value of the standard deviation, as a low-contrast image, and judges the divided image, of which the average value of the luminance histograms is over the preset first threshold value and is below the preset second threshold value, and of which the standard deviation is over the preset threshold value of the standard deviation, as a normal image.

According to an aspect of the invention, the judgment unit judges the image data as a low-quality data if the rate of the divided image that is judged as the normal image among the plurality of divided images is below a preset threshold rate.

According to an aspect of the invention, the division unit divides the image data into the plurality of divided images after converting the image data into a gamut in the form in which luminance information and color information are separated from the image data.

According to an aspect of the invention, the image processing device further includes a storage unit storing the image data.

According to an aspect of the invention, the division unit reads the image data stored in the storage unit, and divides the read image data into the plurality of divided images.

According to an aspect of the invention, the image processing device further includes an input unit receiving the image data from an outside.

According to an aspect of the invention, the division unit may divide the image data received through the input unit into the plurality of divided images.

According to an aspect of the invention, the image processing device further includes a control unit discarding the image data if the image data is judged as the low-quality data.

According to an aspect of the invention, the image processing device further includes an image processor performing an image process for improving the quality of the image data when the image data is judged as the low-quality data.

In another aspect of the present invention, there is provided an image determining method, which includes dividing image data into a plurality of divided images, calculating luminance histograms of the respective divided images, judging qualities of the respective divided images using the luminance histograms of the divided images, and judging the quality of the image data in consideration of rates of the judged qualities.

According to an aspect of the invention, the image determining method further includes adjusting the whole contrast of the image data before dividing the image data.

According to an aspect of the invention, the, the step of adjusting the contrast comprises using the following equations,

$$low = \begin{cases} \min\{i \ / \ H(i) > H_0 \ , \ i < T \ or \ i = T\} \\ T \ , \ i > T \end{cases}$$

$$high = \max(i) \; : \; H[i] > T$$

$$R(r,c) = (2^n - 1) * \{(R(r,c) - low\} / (high - low)$$

$$G(r,c) = (2^n - 1) * \{(G(r,c) - low\} / (high - low)$$

$$B(r,c) = (2^n - 1) * \{(B(r,c) - low\} / (high - low)$$

where, *low* and *high* denote lower and upper limit values for contrast adjustment, *i* luminance, *H(i)* luminance frequency, *r* and *c* horizontal and vertical coordinates of a pixel, *T* a threshold value for preventing an image from being excessively dark, $H_0$ a threshold value of histogram levels, *n* the number of image bits, and *R(r, c), G(r, c),* and *B(r,* c) are R, G, and B component values, respectively.

According to an aspect of the invention, the judging the qualities of the respective divided images includes judging the divided image, of which an average value of the luminance histograms is below a preset first threshold value, as an underexposed image, judging the divided image, of which the average value of the luminance histograms is over a preset second threshold value, as an overexposed image, judging the divided image, of which the average value of the luminance histograms is over the preset first threshold value and is below the preset second threshold value, and of which the standard deviation is below a preset threshold value of the standard deviation, as a low-contrast image, and judging the divided image, of which the average value of the luminance histograms is over the preset first threshold value and is below the preset second threshold value, and of which the standard deviation is over the preset threshold value of the standard deviation, as a normal image.

According to an aspect of the invention, the judging the quality of the image data includes judging the image data as a low-quality data when the rate of the divided image that is judged as the normal image among the plurality of divided images is below a preset threshold rate.

According to an aspect of the invention, the dividing the image data includes dividing the image data into the plurality of divided images after converting the image data into a gamut in the form in which luminance information and color information are separated from the image data.

In still another aspect of the present invention, there is provided a computer-readable medium in which a program used by a computer to perform an image-quality judgment process is stored, the image-quality judgment process including dividing image data into a plurality of divided images, calculating luminance histograms of the respective divided images, judging qualities of the respective divided images using the luminance histograms of the divided images, and judging the quality of the image data in consideration of rates of the judged qualities.

According to an aspect of the invention, the image-quality judgment process further includes adjusting the whole contrast of the image data before dividing the image data.

According to an aspect of the invention, in the image-quality judgment process, the judging qualities of the respective divided images including judging the divided image, of which an average value of the luminance histograms is below a preset first threshold value, as an underexposed image, judging the divided image, of which the average value of the luminance histograms is over a preset second threshold value, as an overexposed image, judging the divided image, of which the average value of the luminance histograms is over the preset first threshold value and is below the preset second threshold value, and of which the standard deviation is below a preset threshold value of the standard deviation, as a low-contrast image, and judging the divided image, of which the average value of the luminance histograms is over the preset first threshold value and is below the preset second threshold value, and of which the standard deviation is over the preset threshold value of the standard deviation, as a normal image.

According to an aspect of the invention, in the image-quality judgment process, the judging the quality of the image data including judging the image data as a low-quality data if the ratio of the divided image that is judged as the normal image among the plurality of divided images is below a preset threshold rate.

The above and other aspects and/or features of the present invention will be more apparent and more readily appreciated by describing in detail certain embodiments of the present invention with reference to the accompanying drawings, in which:

Figure 1 is a block diagram illustrating the construction of an image processing device according to an embodiment of the present invention;

Figure 2 is a block diagram illustrating the construction of an image processing device according an embodiment of the present invention;

Figure 3 is a block diagram explaining in detail the construction of the image processing devices of Figures 1 and 2 according an embodiment of the present invention;

Figures 4a and 4b are views explaining an image dividing method in the image processing device according to an embodiment of the present invention;

Figures 5a and 5b are views illustrating an example of a normal image and its luminance histograms;

Figures 6a and 6b are views illustrating an example of an underexposed image and its luminance histograms;

Figures 7a and 7b are views illustrating an example of an overexposed image and its luminance histograms;

Figures 8a and 8b are views illustrating an example of a low-contrast image and its luminance histograms;

Figures 9a and 9b are views illustrating an example of an image and its luminance histograms;

Figures 10a and 10b are views illustrating qualities and rates of divided images when the image of Figure 9a is divided by 2*2;

Figures 11a and 11b are views illustrating qualities and rates of divided images when the image of Figure 9a is divided by 3*3;

Figure 12 is a flowchart illustrating an image determining method according to an embodiment of the present invention;

Figure 13 is a flowchart illustrating an image determining method according to an embodiment of the present invention; and

Figure 14 is a flowchart determining method of a divided image quality according to an embodiment of the present invention.

Certain embodiments of the present invention will be described in greater detail with reference to the accompanying drawings. In the following description, same drawing reference numerals are used for the same elements even in different drawings. The matters defined in the description such as a detailed construction and elements are nothing but the ones provided to assist in a comprehensive understanding of the invention. Thus, it is apparent that aspects of the present invention can be carried out without those defined matters. Also, well-known functions or constructions are not described in detail since they would obscure the invention in unnecessary detail.

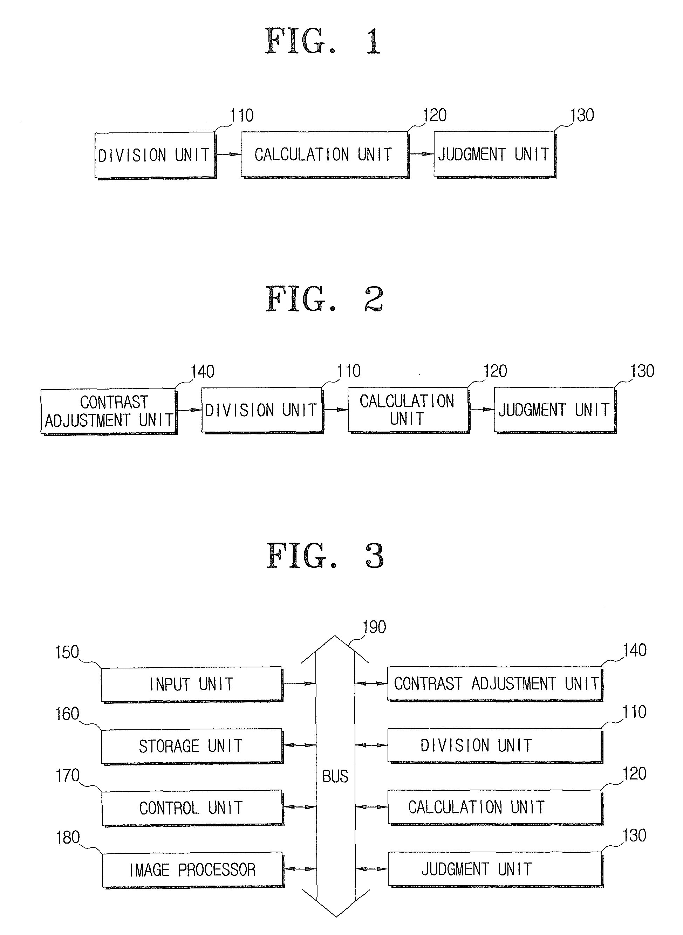

Figure 1 is a block diagram illustrating the construction of an image processing device according to an embodiment of the present invention. Referring to Figure 1, the image processing device includes a division unit 110, a calculation unit 120, and a judgment unit 130. The division unit 110 divides image data into a plurality of divided images. The image data is not restricted to source, and may be data photographed or taken by an imaging module (not illustrated) provided in the image processing device or an external imaging device. The image data may also be data pre-stored in an internal memory of the image processing device.

The division unit 110 divides the whole image by n*m in width and length. In this example, n and m may be the same value or may be of different values. Details of such image division are disclosed in the theses "An Extendible Hash for Mul-ti-Precision Similarity Querying of Image Databases" announced by L. Shu, M. T. Ozsu, V. Oria, and R. Ng, in 27th International Conference for VLDB (Very Large Database system) held in Rome, Italy, on September 2001, and "Image Quality Improvement by Adaptive Exposure Correction techniques" announced by G. Messina, A. Castorina, S. Battiato, and A. Bosco, in IEEE ICME'03 International Conference and Expo for Multimedia, held in Baltimore, U.S.A., on July 2003, the disclosures of which are incorporated by reference.

The division rate of the division unit 110 may be optionally determined. If the size of the divided image is too large, the accuracy of the quality determination for important parts of the image is degraded. By contrast, if the size of the divided image is too small, the respective divided images may have a uniform color, and may be judged as the low-contrast regions. Accordingly, it is preferable to properly divide the whole image according to the purpose of the design. In practice, it is preferable to divide the image by 2*2, 3*3, and 4*4. Additionally, while described as being of the same size, it would be possible to divide the image in unequal sizes, such as where certain parts of the picture are more critical than others and require a finer mesh for the luminance histograms to accurately determine image quality.

The division unit 110 may convert the image data into a color gamut having luminance information that is separated from color information before it divides the image. Specifically and while not limited thereto, the division unit 110 converts the image into a YUV color gamut using Equation (1).

$$
\begin{aligned}
Y &= 0.299 * R + 0.587 * G + 0.114 * B \\
U &= -0.147 * R - 0.289 * G + 0.436 * B \qquad \ldots\ldots (1) \\
V &= 0.615 * R - 0.515 * G - 0.100 * B
\end{aligned}
$$

In addition, the division unit 110 may convert the image data into HIS color model in addition to or instead of the YUV color gamut. After the image quality determination work is completed, the converted model may be converted into the original color model. However, it is understood that the division unit 110 need not be included in the image processing device in all aspects of the invention, such as where the image is divided prior to being received at the device.

The calculation unit 120 calculates luminance histograms of the respective images divided by the division unit 110. Specifically, the calculation unit 120 calculates the occurrence frequency of the respective luminance values by confirming all the luminance values of the respective pixels in the divided images.

The judgment unit 130 judges the qualities of the respective divided images using the luminance histograms calculated for the respective divided images. Then, the judgment unit 130 judges the quality of the whole image in consideration of the rates of the qualities of the respective divided images. Specifically, the judgment unit 130 calculates an average value of luminance histograms for each divided image. By way of example, the average value can be calculated by Equation (2).

$$
H_{mean} = \frac{1}{N} \sum_{i=1}^{N} H(i) \qquad \ldots\ldots (2)
$$

In Equation (2), $H_{mean}$ denotes an average value of luminance histograms, $i$ a luminance value, $H(i)$ luminance frequency, and N the number of luminance histograms, respectively.

The judgment unit 130 judges the qualities of the respective divided images using the calculated average values. By way of example, the judgment unit 130 judges the divided image as an underexposed image when the average value of the luminance histograms is below a preset first threshold value. The judgment unit 130 judges the divided image as an overexposed image when the average value of the luminance histograms is over a preset second threshold value. Here, the second threshold value is larger than the first threshold value. However, other numbers of thresholds can be used in other aspects of the invention.

By way of example, if the whole luminance range is 0 to 255, the first threshold value may be set to 64, and the second threshold value may be set to 192. In this example, if the calculated average value is in the range of 0 to 63, the judgment unit 130 judges the corresponding divided image as an underexposed image. If the average value is in the range of 192 to 255, the judgment unit 130 judges the corresponding divided image as an overexposed image. If the average value is at or between the first threshold value (64) and the second threshold value (192), the judgment unit 130 confirms the standard deviation of the corresponding divided image.

While not required in all aspects, the judgment unit 130 can calculate the standard deviation using Equation (3).

$$
\sigma = \sqrt{\frac{1}{N-1} \sum_{i=1}^{N} (H(i) - H_{mean})^2} \qquad \ldots\ldots (3)
$$

In Equation (3), σ denotes the standard deviation.

The judgment unit 130 judges the divided image, of which the calculated standard deviation value is below a threshold value of the standard deviation, as the low contrast image. By contrast, the judgment unit 130 judges the divided image, of which the calculated standard deviation value is over the threshold value of the standard deviation, as the normal image. That is, the judgment unit 130 judges the divided image as the overexposed image, the underexposed image, the low-contrast image, or the normal image, according to the average value and the standard deviation. In this embodiment of the present invention, it is exemplified that the image is classified into four kinds of images. However, it is also possible to classify the image in more detail in other embodiments.

The judgment unit 130 judges the quality of the whole image using the rates of the qualities of the respective divided images. That is, if the rate of the normal images to the divided images is below the preset threshold rate, the judgment unit 130 judges the whole image as the low-quality image. In this case, the judgment unit 130 may discard the low-quality image or improve the quality of the image by performing a separate image improving process. In addition, the judgment unit 130 may store the low-quality images in a separate storage space so as to discriminate them from high-quality images.

Also, the judgment unit 130 can alert a user of the low quality image to allow the user a choice of saving, deletion and/or image improvements. The grade according to the rate of the normal images to the whole divided images may be defined as Table 1 in an aspect of the invention.

Table 1

| Parameter Value (Normal, %) | Image Quality |
| --- | --- |
| 89-100 | Excellent |
| 78-88 | Good |
| 55-77 | Satisfactory |
| Below 55 | Bad |

According to Table 1, the judgment unit 130 judges the whole image as the low-quality image if the rate of the normal images to the whole divided images is below the threshold rate (e.g., 55%). However, it is understood that more or fewer threshold rates can be used, and that such rates could vary according to image type (i.e., low light, moving subject, etc.)

Figure 2 is a block diagram illustrating the construction of an image processing device according an embodiment of the present invention. Referring to Figure 2, the image processing device further includes a contrast adjustment unit 140 in addition to the division unit 110, the calculation unit 120, and the judgment unit 130.

The contrast adjustment unit 140 makes the luminance histograms of the whole image be evenly distributed by adjusting the contrast of the image data before the image data quality determining work is performed at units 110, 120, 130. That is, the whole luminance of the image may be high or low in accordance with the characteristic of the photographed object. Accordingly, the contrast adjustment unit 140 adjusts the contrast of the image so that the determination of the image qualities can be performed under the same condition.

While not required in all aspects, the shown embodiment of the contrast adjustment unit 140 first defines the lower limit value and the upper limit value for the contrast adjustment of the whole image data. The lower limit value and the upper limit value can be defined as Equation (4).

$$low = \begin{cases} \min\{i \ / \ H(i) > H_0 \ , \ i < T \ or \ i = T\} \\ T \ , \ i > T \end{cases} \quad \cdots \cdots \ (4)$$

$$high = \max(i) \ : \ H[i] > T$$

In Equation (4), low and high denote the lower and upper limit values for the contrast adjustment, $i$ the luminance, $H(i)$ the luminance frequency, $r$ and $c$ the horizontal and vertical coordinates of a pixel, $T$ the threshold value for preventing the image from being excessively dark, and $H_0$ the threshold value of histogram levels.

The contrast adjustment unit 140 can adjust the whole contrast by substituting the terms low and high as defined in Equation (4) in Equation (5).

$$R(r,c)' = (2^n - 1) * \{(R(r,c) - low\}/(high - low)$$
$$G(r,c)' = (2^n - 1) * \{(G(r,c) - low\}/(high - low) \qquad \ldots\ldots (5)$$
$$B(r,c)' = (2^n - 1) * \{(B(r,c) - low\}/(high - low)$$

In Equation (5), $n$ denotes the number of image bits, and $R(r, c), G(r, c),$ and $B(r, c)$ denote the R, G, and B component values. According to Equation (5), the R, G, and B components of the pixel at a point (r, c) are adjusted to new values by the low and high values. Accordingly, the contrast of the whole image is adjusted. According to an aspect of the invention, the above-described contrast adjustment may be performed only when the luminance frequency corresponding to the luminance, i=0, 1, is "0", or the luminance frequency corresponding to the luminance, i=254, 255, is "0".

If the luminance histograms of the whole image are adjusted to be evenly distributed by the contrast adjustment unit 140, the adjusted image data is provided to the division unit 110. The division unit 110 divides the contrast-adjusted image data, and the calculation unit 120 calculates the luminance histograms of the respective divided images. The judgment unit 130 judges the qualities of the divided images and the quality of the whole image using the calculated luminance histograms. This operation is the generally same as that as explained with reference to Figure 1, the detailed explanation thereof will be omitted.

Figure 3 is a block diagram explaining in detail the construction of the image processing devices of Figures 1 and 2. Referring to Figure 3, the image processing device according to the present invention further includes an input unit 150, a storage unit 160, a control unit 170, an image processor 180, and a bus 190, in addition to the division unit 110, the calculation unit 120, the judgment unit 130, and the contrast adjustment unit 140.

The input unit 150 receives the image data from an outside source, such as a camera or a network. The storage unit 160 stores the image data received through the input unit 150 or image data photographed through an internal imaging module (not illustrated). The storage unit 160 may be implemented by a magnetic disk, flash memory, SD card, a magnetic tape, a cassette, a CD-ROM, a CD-RW, a DVD, or other memories. While not required, it is understood that the input unit 150 can be the image sensors of a camera and the storage unit 160 can be removable and/or permanent memories in aspects of the invention.

The image processing device according to the present invention can determine the image quality of the image data received through the input unit 150 or the image data stored in the storage unit 160. That is, the division unit 110 divides the image data, the calculation unit 120 calculates the luminance histograms of the divided image data, and the judgment unit 130 judges the qualities of the divided images and the quality of the whole image using the calculated luminance histograms. In this example, the contrast adjustment unit 140 may adjust the contrast of the image data and provide the contrast-adjusted image data to the division unit 110. However, it is understood the contrast adjustment unit 140 need not be used in all aspects.

On the other hand, the control unit 170 processes the image data according to the result of judgment performed by the judgment unit 130. That is, if it is judged that the image data is low-quality data, the control unit 170 may discard the image data. If a storage space for separately managing the image data judged as the low-quality data is provided in the storage unit 160, the control unit 170 may instead store the low-quality data in the corresponding storage space. The control unit 170 can also alert a user to the low quality to allow a user to re-take the image.

Also, the control unit 170 may control the image processor 180 to improve the quality of the low-quality data. The image processor 180 can adjust the quality of the image data by performing an image process. Specifically, if the image is judged as the overexposed image, the image processor 180 may lower the luminance of the whole image, while if the image is judged as the underexposed image, the processor 180 may heighten the luminance of the whole image. If the image is judged as the low-contrast image, the image processor 180 may perform the contrast adjustment process as Equations (4) and (5) according to an aspect of the invention. However, any conventional image processing technology can be used instead of or addition to Equations (4) and (5) in aspects of the invention.

On the other hand, if it is judged that the image data is not the low-quality data, the control unit 170 can normally use the corresponding image data. Specifically, the control unit 170 controls the storage unit 160 to store the image data as the normal data, or controls an output means (not illustrated) to transmit the image data to an outside device (such as a display, to another device across a network, or a printer). In addition, and while not required in all aspects, the control unit 170 controls a printing module (not illustrated) to print the image data, transmit the image across a network to be shared at another device, and/or controls a display (not illustrated) to display the image data.

The bus 190 serves as data transmission paths among the respective constituent elements.

While not required in all aspects, the contrast adjustment unit 140, the division unit 110, the calculation unit 120, the judgment unit 130, and/or the control unit 170 may be implemented by a microprocessor or processors. In this embodiment, the microprocessor performs the above-described processes by successively reading and executing programs, which include an image quality judgment process, stored in a main memory and/or the storage unit 160.

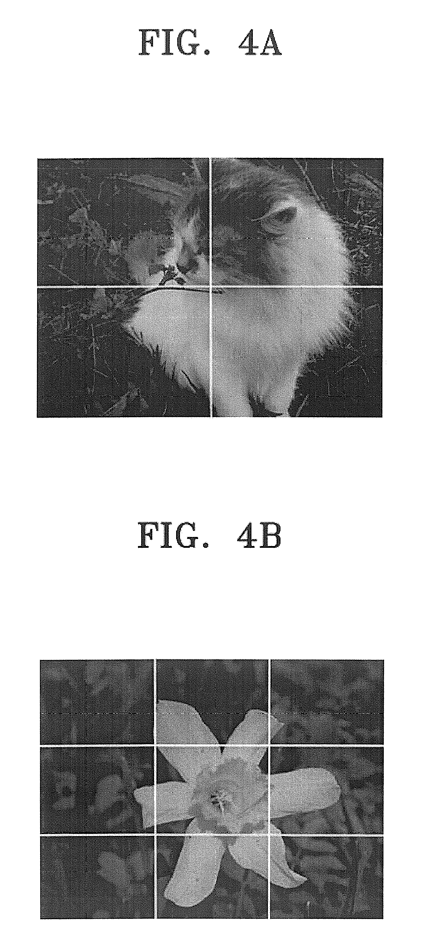

Figures 4a and 4b are views explaining an image dividing method in the image processing device according to an embodiment of the present invention. As shown in Figure 4a, four divided images can be obtained by dividing the image by 2*2 in width and length. Also, as shown in Figure 4b, nine divided images can be obtained by dividing the image by 3*3 in width and length. The image may also be divided by 3*2, 4*3 or other units in width and length in other embodiments.

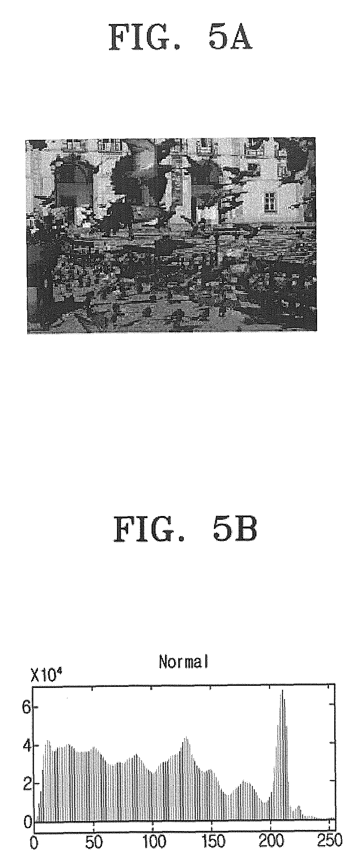

Figures 5a to 8b are views illustrating examples of diverse images and their luminance histograms. First, Figure 5a shows an example of a normal image, and Figure 5b shows the luminance histograms for the image in Figure 5a. Referring to Figure 5b, it can be seen that the luminance histograms are evenly distributed in the range of about 0 to 225. In the case of the image data photographed in a proper exposed state, the whole luminance histograms are uniformed distributed.

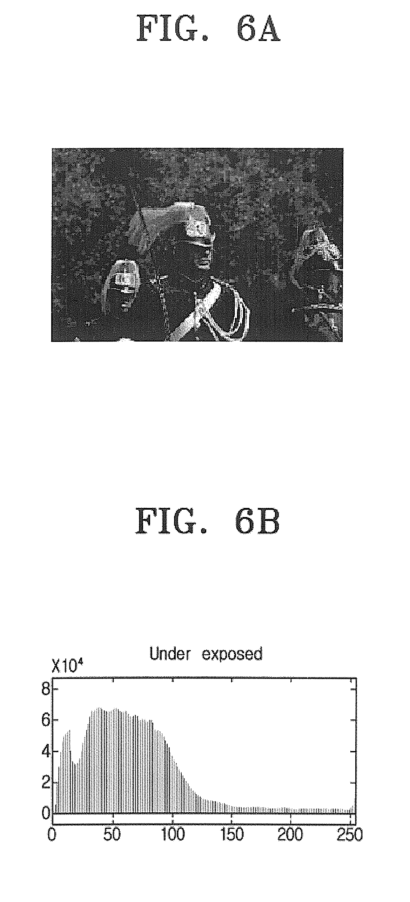

Figure 6a shows an example of an underexposed image and Figure 6b shows its luminance histograms. Due to the underexposed state, the whole image in Figure 6a appears to be dark. Thus, the luminance histograms in Figure 6b in the range of luminance values below 130 appear to be high.

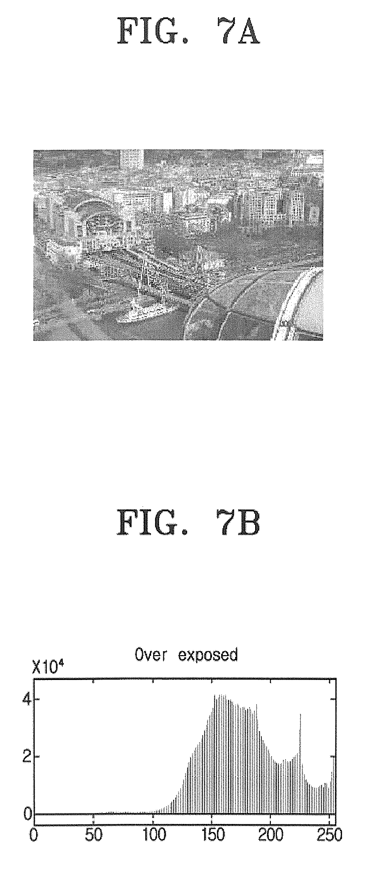

Figure 7a shows an example of an overexposed image and Figure 7b shows its luminance histograms. Referring to Figure 7b, the luminance histograms of Figure 7b in the range of luminance values over about 130 appear to be high.

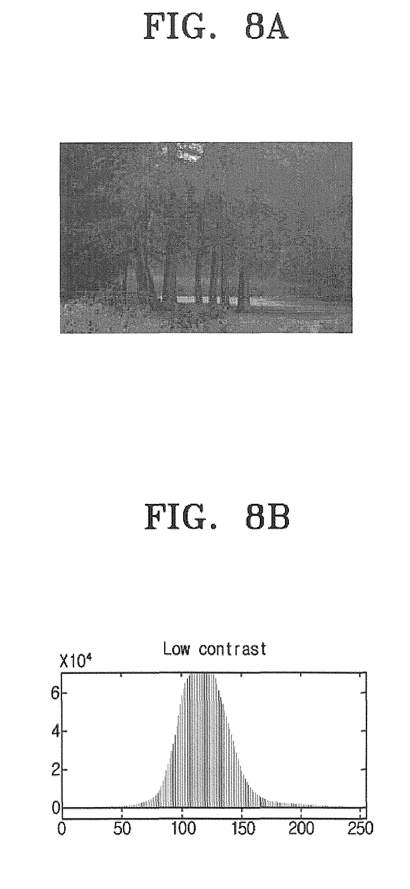

Figure 8a shows an example of a low-contrast image and Figure 8b shows its luminance histograms. Referring to Figure 8b, it can be seen that the high luminance histograms are concentrated on the intermediate luminance value, and its distribution range is narrow in the range of about 80 to 150. Accordingly, the images of Figures 6a, 7a, and 8a are judged as the low-quality images, whereas the image of Figure 5a is judged to be acceptable.

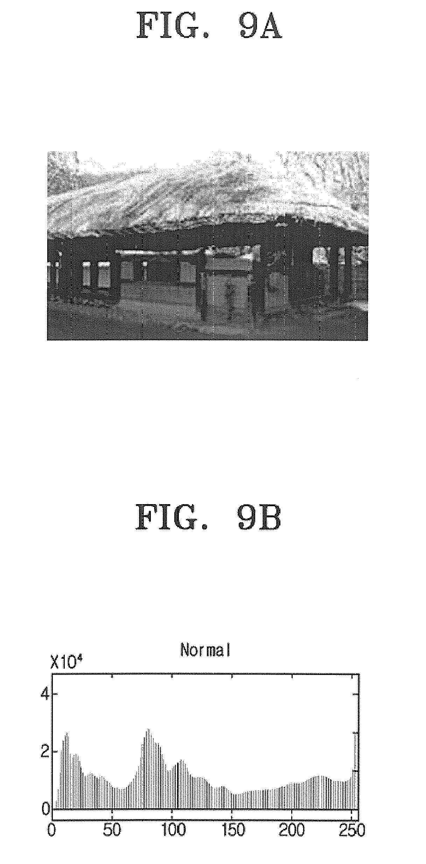

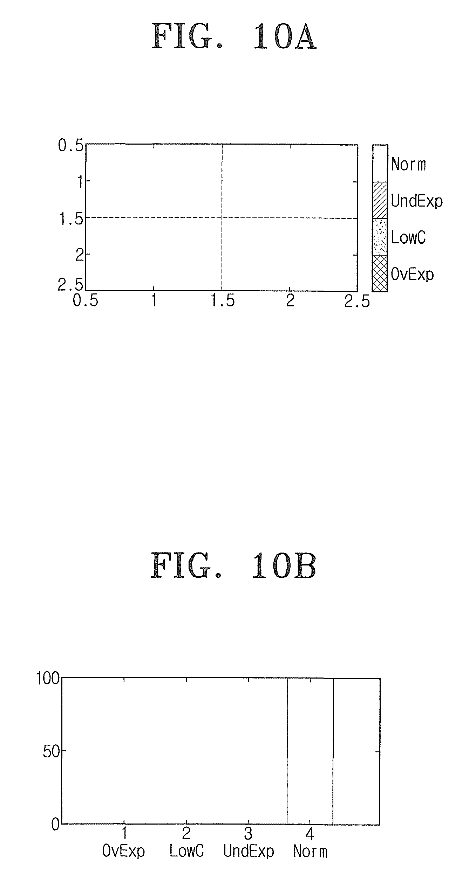

Figure 10a shows the qualities of four divided images obtained by dividing the image of Figure 9a. Referring to Figure 10a, all the four divided images appear as the normal images consistent with the luminance histograms shown in Figure 9b. Figure 10b shows the quality rates of the divided images judged by the image processing device according to an aspect of the present invention. In Figure 10b, all the divided images are normal images, and this case can be judged as the uppermost quality (e.g., "excellent") in accordance with Table 1.

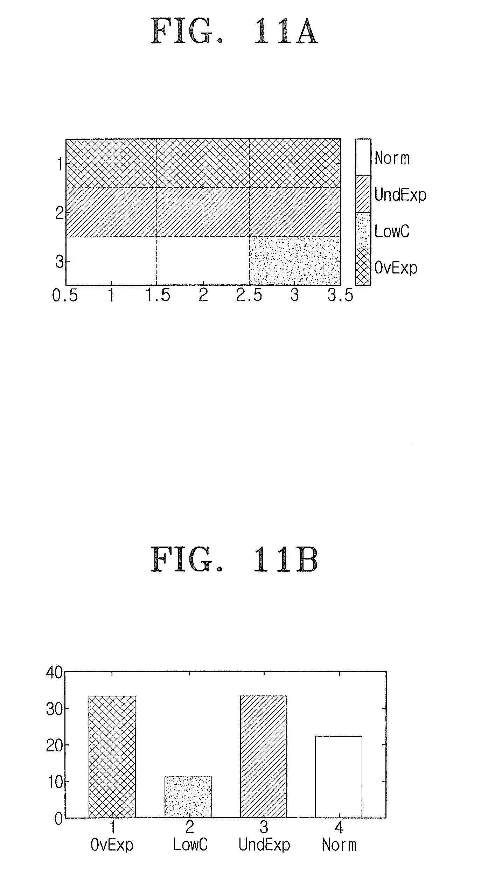

Figures 11a and 11b are views illustrating qualities and rates of divided images when the image of Figure 9a is divided by 3*3. Referring to Figure 11a, three upper divided images are judged as overexposed images, and three intermediate divided images are judged as underexposed images. Also, two left divided images among the three lower divided images are judged as normal images. Further, one right divided image among the three lower divided images is judged as a low-contrast image. Accordingly, the rate of the normal images becomes (2/9)*100% (i.e., about 22%). In this example, the whole image is judged as the low-quality image in accordance with Table 1. As such, while the image of Figure 9a is otherwise judged passable when taken as a whole, through a precise judgment process of its components, it is determined to be the low-quality image. As described above, the image quality can be precisely determined according to aspects of the present invention.

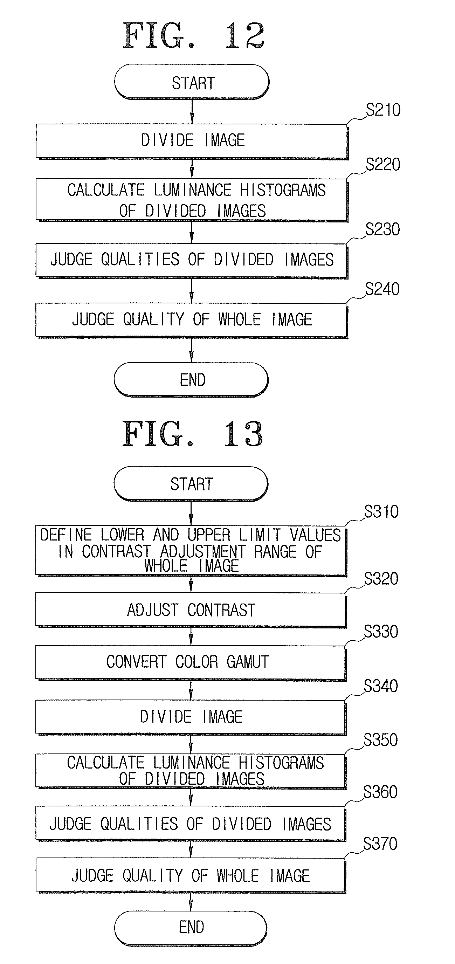

Figure 12 is a flowchart illustrating an image determining method according to an embodiment of the present invention. Referring to Figure 12, the image data is divided into a plurality of divided images (S210). According to aspects of the invention, the image data may be pre-stored image data or image data received from an outside.

Then, the luminance histograms of the respective divided images are calculated (S220). The qualities of the respective divided images are judged using their average value of luminance histogram and the standard deviation (S230). Accordingly, the divided image can be classified into one of an underexposed image, an overexposed image, a normal image, and a low-contrast image.

The quality of the whole image is judged in consideration of the rates of the qualities of the respective divided images (S240). That is, if the quality of the normal image is over a predetermined rate, the whole image is judged as the high-quality image. If the quality of the normal image is below the predetermined rate, the whole image is judged as a low-quality image. After the judgment, the low-quality image may be discarded or separately managed, or the quality of the image may be improved by applying an image improvement process to the low-quality image. By contrast, in the case of the high-quality image, it may be used in diverse manners. That is, the high-quality image may be stored in the memory, transmitted to an external device, and/or printed.

Figure 13 is a flowchart illustrating an image determining method according to an embodiment of the present invention. Referring to Figure 13, a contrast adjustment work is performed with respect to the image data that is subject to image quality determination. Specifically, the lower limit value and the upper limit value of the contrast adjustment range are first defined (S310). In this example, Equation (4) as described above may be used.

The contrast of the image data is adjusted using the lower limit value and the upper limit value (S320). In this example, Equation (5) as described above may be used.

Thereafter, the color gamut of the image data is converted (S330). In this case, it is preferable, but not required, that the image data is converted into a YUV color gamut such as using equation (1) or an HIS color gamut, in which luminance information is separated from color information. If the original color gamut of the image data is in the YUV or HIS color gamut, the color gamut conversion work is omitted.

Then, the image is divided into a plurality of divided images (S340), the luminance histograms of the divided image calculated (S350), and then quality judgment of the divided images (S360) and quality judgment of the whole image (S370) are performed. Since these operations have been explained with reference to Figure 12, the duplicate explanation thereof will be omitted.

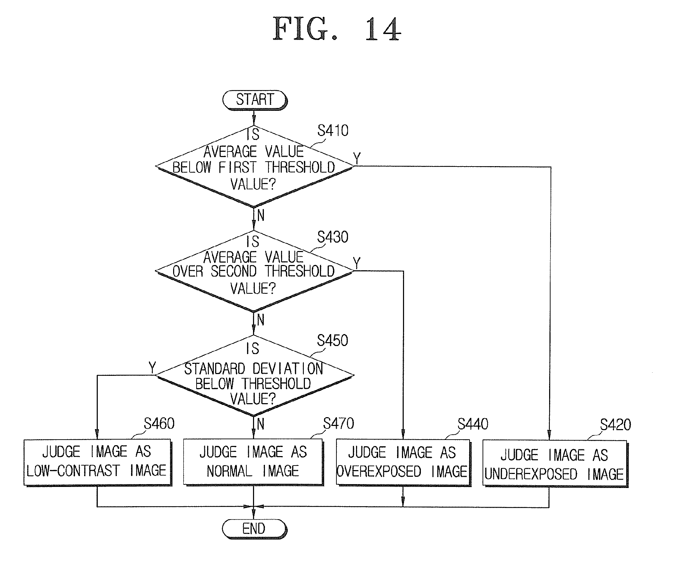

Figure 14 is a flowchart determining method of a divided image quality according to an embodiment of the present invention. Referring to Figure 14, the average value of the divided image is compared with the preset first threshold value (S410). If the average value is below the first threshold value, the corresponding divided image is judged as the underexposed image (S420). In contrast, if the average value is over the first threshold value, it is again compared with the second threshold value (S430). If the average value is over the second threshold value, the corresponding image is judged as the overexposed image (S440).

If the average value is below the second threshold value, the standard deviation of the divided image is compared with the predetermined threshold value of the standard deviation (S450). If the standard deviation of the divided image is below the threshold value, it is judged as the low-contrast image (S460). If the standard deviation of the divided image is over the threshold value, it is judged as the normal image (S470). Through the above processes, the respective divided image can be judged as one of the underexposed image, overexposed image, low-contrast image, and normal image.

A computer program that performs the all or portions of the algorithm as illustrated in Figures 12 to 14 may be stored in diverse computer-readable media, such as a hard disk memory, floppy disk, CD, DVD, memory card, and others, to be implemented on one or more computers and/or processors.

As described above, according to aspects of the present invention, the image data is divided into a plurality of divided images, the qualities of the divided images are determined, and then the quality of the whole image is determined by combining the result of quality determination. Accordingly, the quality of the image data can be judged more accurately and more precisely. This accurate judgment of the image data can prevent any normal data from being discarded due to the misrecognition of the image quality, and will be of great help in determining whether to process the image.

The foregoing embodiment and advantages are merely exemplary and are not to be construed as limiting the present invention, the definition of which is set forth in the accompanying claims and equivalents thereof. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

**1.** An image processing device comprising:

   a division unit (110) dividing image data into a plurality of divided images;
   a calculation unit (120) calculating a plurality of luminance histograms of the respective divided images; and
   a judgment unit (130) judging qualities of the respective divided images using the plurality of luminance histograms of the divided images and judging the quality of the image data in consideration of rates of the judged qualities.

**2.** The image processing device of claim 1, further comprising a contrast adjustment unit (140) adjusting a contrast of the image data to be divided and providing the adjusted contrast to the division unit (110).

3. The image processing device of claim 2, wherein the contrast adjustment unit (140) adjusts the whole contrast of the image data using the following equations,

$$low = \begin{cases} \min\{i \ / \ H(i) > H_0 \ , \ i < T \ or \ i = T\} \\ T \ , \ i > T \end{cases}$$

$$high = \max(i) \ : \ H[i] > T$$

$$R(r,c) = (2^n - 1) * \{(R(r,c) - low\}/(high - low)$$

$$G(r,c) = (2^n - 1) * \{(G(r,c) - low\}/(high - low)$$

$$B(r,c) = (2^n - 1) * \{(B(r,c) - low\}/(high - low)$$

where:

low and high denote lower and upper limit values for contrast adjustment,
$i$ is luminance,
$H(i)$ is luminance frequency,
$r$ and $c$ are horizontal and vertical coordinates of a pixel,
$T$ is a threshold value for preventing an image from being excessively dark,
$H_0$ is a threshold value of histogram levels,
$n$ is the number of image bits, and
$R(r, c), G(r, c),$ and $B(r, c)$ are R, G, and B component values, respectively.

4. The image processing device of any preceding claim, for each divided image, wherein the judgment unit (130):

judges the divided image as an underexposed image when an average value of the calculated luminance histograms for the divided image is below a preset first threshold value;
judges the divided image as an overexposed image when the average value of the calculated luminance histograms for the divided image is over a preset second threshold value;
judges the divided image as a low-contrast image when the average value of the calculated luminance histograms for the divided image is at or between the preset first threshold value and the preset second threshold value, and a standard deviation is below a preset threshold value of the standard deviation; and
judges the divided image as a normal image when the average value of the calculated luminance histograms for the divided image is at or between the preset first threshold value and the preset second threshold value, and when the standard deviation is over the preset threshold value of the standard deviation.

5. The image processing device of claim 4, wherein the judgment unit (130) judges the image data as a low-quality data when the rate of the divided image that is judged as the normal image among the plurality of divided images is below a preset threshold rate.

6. The image processing device of any preceding claim, wherein the division unit (110) divides the image data into the plurality of divided images after converting the image data into a color gamut in the form in which luminance information and color information are separated from the image data.

**7.** The image processing device of any preceding claim, further comprising a storage unit (160) storing the image data; wherein the division unit (110) reads the image data stored in the storage unit (160), and divides the read image data into the plurality of divided images.

**8.** The image processing device of any preceding claim, further comprising an input unit (150) receiving the image data from an external source; wherein the division unit (110) divides the image data received through the input unit (150) into the plurality of divided images.

**9.** The image processing device of claim 1, further comprising a control unit (170) discarding the image data when the quality of the image data is judged as low-quality.

**10.** The image processing device of claim 1, further comprising an image processor (180) performing an image process for improving the quality of the image data when the quality of the image data is judged as low-quality.

**11.** An image determining method comprising:

dividing image data into a plurality of divided images;
calculating a plurality of luminance histograms for the respective divided images;
judging qualities of the respective divided images using the plurality of luminance histograms for the corresponding divided images; and
judging the quality of the image data in consideration of rates of the judged qualities.

**12.** The image determining method of claim 11, further comprising, before dividing the image data, adjusting the whole contrast of the image data.

**13.** The image determining method of claim 12, wherein the adjusting the contrast uses following equations,

$$low = \begin{cases} \min\{i \ / \ H(i) > H_0 \ , \ i < T \ or \ i = T\} \\ T \ , \ i > T \end{cases}$$

$$high = \max(i) \ : \ H[i] > T$$

$$R(r,c) = (2^n - 1) * \{(R(r,c) - low\} / (high - low)$$

$$G(r,c) = (2^n - 1) * \{(G(r,c) - low\} / (high - low)$$

$$B(r,c) = (2^n - 1) * \{(B(r,c) - low\} / (high - low)$$

where
*low* and *high* denote lower and upper limit values for contrast adjustment,
*i* is luminance,
*H(i)* is luminance frequency,
*r* and *c* are horizontal and vertical coordinates of a pixel,
*T* is a threshold value for preventing an image from being excessively dark,
$H_0$ is a threshold value of histogram levels,
*n* is the number of image bits, and

*R(r, c), G(r, c),* and *B(r, c)* are R, G, and B component values, respectively.

14. The image determining method of any of claims 11 to 13, wherein, for each divided image, the judging the qualities of the respective divided images includes:

   judging the divided image as an underexposed image when an average value of the calculated luminance histograms for the divided image is below a preset first threshold value;
   judging the divided image as an overexposed image when the average value of the calculated luminance histograms for the divided image is over a preset second threshold value;
   judging the divided image as a low-contrast image when the average value of the calculated luminance histograms for the divided image is at or between the preset first threshold value and the preset second threshold value, and a standard deviation is below a preset threshold value of the standard deviation; and
   judging the divided image as a normal image when the average value of the calculated luminance histograms for the divided image is at or between the preset first threshold value and the preset second threshold value, and the standard deviation is over the preset threshold value of the standard deviation.

15. The image determining method of claim 14, wherein the judging the quality of the image data includes judging the quality of the image data as a low-quality when the rate of the divided image that is judged as the normal image among the plurality of divided images is below a preset threshold rate.

16. The image determining method of any of claims 11 to 15, wherein the dividing the image data includes dividing the image data into the plurality of divided images after converting the image data into a color gamut in the form in which luminance information and color information are separated from the image data.

17. A computer-readable medium encoded with a program that implements an image-quality judgment process as recited in any of claims 11 to 16, performed by at least one computer.

18. An image processing device comprising:

   a calculation unit (120) that calculates, for each of a plurality of divided portions of an image, a corresponding luminance histograms to produce a plurality of luminance histograms; and
   a judgment unit (130) that uses each of the plurality of luminance histograms to judge qualities of the each of the divided portions, and judges an overall quality of the image according to the judged qualities for each of the divided portions.

19. The image processing device of claim 18, further comprising a contrast adjustment unit (140) that adjusts a contrast of the image prior to the image being received at the calculation unit (120).

20. The image processing device of claim 19, wherein the contrast adjustment unit (140) adjusts the contrast of the image using the following equations:

$$low = \begin{cases} \min\{i \ / \ H(i) > H_0 \ , \ i < T \ or \ i = T\} \\ T \ , \ i > T \end{cases}$$

$$high = \max(i) \ : \ H[i] > T$$

$$R(r,c) = (2^n - 1) * \{(R(r,c) - low\} / (high - low)$$

$$G(r,c) = (2^n - 1) * \{(G(r,c) - low\} / (high - low)$$

$$B(r,c) = (2^n - 1) * \{(B(r,c) - low\}/(high - low)$$

where:

low and high denote lower and upper limit values for contrast adjustment,
i is luminance,
H(i) is luminance frequency,
r and c are horizontal and vertical coordinates of a pixel,
T is a threshold value for preventing an image from being excessively dark,
$H_0$ is a threshold value of histogram levels,
n is the number of image bits, and
R(r, c), G (r, c), and B(r, c) are R, G, and B component values, respectively.

21. The image processing device of any of claims 18 to 20, wherein the judgment unit (130):

calculates a standard deviation for the divided portion;
judges the divided portion as a low-contrast image when the calculated standard deviation is at or below a threshold value of the standard deviation; and
judges the divided portion as a normal image when the calculated standard deviation is over the threshold value of the standard deviation.

22. The image processing device of any of claims 18 to 21, wherein the judgment unit (130):

judges the divided portion as an underexposed image when an average value of the calculated luminance histograms is below a first value; and
judges the divided portion as an overexposed image when the average value of the plurality of the luminance histograms is over a second value.

23. The image processing device of claim 22, wherein, when the average value of the calculated luminance histograms for the divided image is at or between the first value and the second value, the judgment unit (130):

calculates a standard deviation for the divided portion;
judges the divided image as a low-contrast image when the calculated standard deviation is below a threshold value; and
judges the divided image as a normal image when the calculated standard deviation is at or over the threshold value.

24. The image processing device of claim 23, wherein the average value of the calculated luminance histograms is calculated according to the following equation:

$$H_{mean} = \frac{1}{N} \left. \sum_{i=1}^{N} H(i) \right|$$

where
$H_{mean}$ is the average value of luminance histograms,
i is a luminance value,
H(i) is a luminance frequency, and
N is the number of luminance histograms.

25. The image processing device of claim 23, wherein the standard deviation is calculated by the following equation:

$$\sigma = \sqrt{\frac{1}{N-1} \sum_{i=1}^{N} (H(i) - H_{mean})^2}$$

where
$\sigma$ is the standard deviation,
$H_{mean}$ is the average value of luminance histograms,
$i$ is a luminance value,
$H(i)$ is a luminance frequency, and
N is the number of luminance histograms.

26. The image processing device of claim 21, wherein the judgment unit (130) judges the image as low-quality when a number of the divided portions are judged as the normal image as compared to the number of divided portions being judged is below a threshold.

27. The image processing device of any of claims 18 to 26, further comprising a division unit (110) that converts the image into a color gamut to separate luminance information from color information, and divides the image into the plurality of divided portions.

# FIG. 1

| DIVISION UNIT | → | CALCULATION UNIT | → | JUDGMENT UNIT |
|---|---|---|---|---|

110        120        130

# FIG. 2

| CONTRAST ADJUSTMENT UNIT | → | DIVISION UNIT | → | CALCULATION UNIT | → | JUDGMENT UNIT |
|---|---|---|---|---|---|---|

140     110     120     130

# FIG. 3

150   INPUT UNIT ↔ | 190 BUS | ↔ CONTRAST ADJUSTMENT UNIT   140

160   STORAGE UNIT ↔ | BUS | ↔ DIVISION UNIT   110

170   CONTROL UNIT ↔ | BUS | ↔ CALCULATION UNIT   120

180   IMAGE PROCESSOR ↔ | BUS | ↔ JUDGMENT UNIT   130

# FIG. 4A

# FIG. 4B

# FIG. 5A

# FIG. 5B

# FIG. 6A

# FIG. 6B

Under exposed

# FIG. 7A

# FIG. 7B

Over exposed

# FIG. 8A

# FIG. 8B

# FIG. 9A

# FIG. 9B

# FIG. 10A

# FIG. 10B

# FIG. 11A

# FIG. 11B

# FIG. 12

```
          ( START )
             │
             ▼
┌─────────────────────────────┐  S210
│        DIVIDE IMAGE         │
└─────────────────────────────┘
             │
             ▼
┌─────────────────────────────┐  S220
│ CALCULATE LUMINANCE HISTOGRAMS │
│      OF DIVIDED IMAGES      │
└─────────────────────────────┘
             │
             ▼
┌─────────────────────────────┐  S230
│ JUDGE QUALITIES OF DIVIDED IMAGES │
└─────────────────────────────┘
             │
             ▼
┌─────────────────────────────┐  S240
│  JUDGE QUALITY OF WHOLE IMAGE │
└─────────────────────────────┘
             │
             ▼
          (  END  )
```

# FIG. 13

```
          ( START )
             │
             ▼
┌─────────────────────────────┐  S310
│ DEFINE LOWER AND UPPER LIMIT VALUES │
│  IN CONTRAST ADJUSTMENT RANGE OF │
│          WHOLE IMAGE        │
└─────────────────────────────┘
             │
             ▼
┌─────────────────────────────┐  S320
│       ADJUST CONTRAST       │
└─────────────────────────────┘
             │
             ▼
┌─────────────────────────────┐  S330
│      CONVERT COLOR GAMUT     │
└─────────────────────────────┘
             │
             ▼
┌─────────────────────────────┐  S340
│        DIVIDE IMAGE         │
└─────────────────────────────┘
             │
             ▼
┌─────────────────────────────┐  S350
│ CALCULATE LUMINANCE HISTOGRAMS │
│      OF DIVIDED IMAGES      │
└─────────────────────────────┘
             │
             ▼
┌─────────────────────────────┐  S360
│ JUDGE QUALITIES OF DIVIDED IMAGES │
└─────────────────────────────┘
             │
             ▼
┌─────────────────────────────┐  S370
│  JUDGE QUALITY OF WHOLE IMAGE │
└─────────────────────────────┘
             │
             ▼
          (  END  )
```

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2002109854 A
- US 2003151674 A
- US 2004120599 A
- US 2004258308 A
- US 6826310 B

### Non-patent literature cited in the description

- **L. SHU ; M. T. OZSU ; V. ORIA ; R. NG.** An Extendible Hash for Mul-ti-Precision Similarity Querying of Image Databases. *27th International Conference for VLDB,* September 2001
- **G. MESSINA ; A. CASTORINA ; S. BATTIATO ; A. BOSCO.** Image Quality Improvement by Adaptive Exposure Correction techniques. *IEEE ICME'03 International Conference and Expo for Multimedia,* July 2003